# EUROPÄISCHE PATENTSCHRIFT

(11) **EP 2 032 826 B1**
(45) Veröffentlichungstag und Bekanntmachung des Hinweises auf die Patenterteilung: **11.05.2011**
(21) Anmeldenummer: 07718494.3
(22) Anmeldetag: 12.06.2007
(51) Int. Cl.: F02F 1/18, F02M 21/02, F02M 25/10, F02M 27/02

(54) **VERBRENNUNGSKRAFTMASCHINE**
INTERNAL COMBUSTION ENGINE
MOTEUR À COMBUSTION INTERNE

(30) Priorität: 28.06.2006 AT 10862006
(43) Veröffentlichungstag der Anmeldung: 11.03.2009
(73) Patentinhaber: Figl, Gerhard, 3430 Tulln an der Donau (AT)
(72) Erfinder: Figl, Gerhard, 3430 Tulln an der Donau (AT)
(74) Vertreter: Holzer, Walter
(86) Internationale Anmeldenummer: PCT/AT2007/000283
(87) Internationale Veröffentlichungsnummer: WO 2008/000004

(56) Entgegenhaltungen:
- CN-A- 1 229 878
- CN-A- 1 952 362
- DE-U1- 8 504 780
- JP-A- 5 086 966

## Beschreibung

Die Erfindung betrifft eine Verbrennungskraftmaschine mit zumindest einem Kolbenzylinder.

In Verbrennungskraftmaschinen entstehen aufgrund der Verbrennung von fossilen, biologischen, festen oder gasförmigen Energieträgern im Brennraum des Zylinders Schadstoffe, wie beispielsweise Stickoxid (NOₓ), Kohlendioxid (CO₂), Ruß- oder Staubpartikel, welche die Umwelt belasten.

Die Erfindung zielt darauf ab, diesen Nachteil zu vermeiden und eine Verbrennungskraftmaschine zu schaffen, die einen möglichst umweltschonenden Betrieb ermöglicht. Die erfindungsgemäße Verbrennungskraftmaschine zeichnet sich dadurch aus, dass sie ein Zwillings-Gas-Injektoren umschließendes Gehäuse mit zwei Einlassöffnungen für das getrennte Zuführen von Wasserstoffgas und Sauerstoffgas in den Brennraum des Kolbenzylinders aufweist, wobei das Gehäuse mit zwei druck- und zeitgesteuerten, elektrischen Einlassventilen und zugeordneten Düsennadeln versehen ist, dass der Brennraum eine Auslassöffnung zum Ausstoßen des Verbrennungsproduktes aufweist, und dass ein Thermolyse-Katalysator die Brennraumummantelung bildet, welcher zwei zueinander beabstandete und konzentrisch angeordnete, einen Zwischenraum umschließende Hohlzylinder aufweist, wobei die den Zwischenraum begrenzenden Wandungen der Hohlzylinder mit einer Metallbeschichtung zur Abgabe der den inneren Hohlzylinder beaufschlagenden Verbrennungswärme versehen sind, und wobei der äußere Hohlzylinder mit einer Einlassöffnung für die Zufuhr von Wasser, einer Auslassöffnung für die Abgabe von Knallgas und einem Temperaturfühler zur Wasserzufuhrsteuerung versehen ist.

Vorzugsweise ist die Auslassöffnung des Brennraumes mit einem durch eine doppeltwirkende Nockenwelle gesteuerten Federventil verschließbar.

Eine Brennkraftmaschine mit einer einen Plasmareaktor bildenden Brennraumummantelung ist aus CN A 1229878 bekannt.

Nach einem weiteren Erfindungsmerkmal umfassen die zwei Einlassventile des Gehäuses jeweils eine Spule, einen Anker und eine Druckfeder.

Nach einem anderen Erfindungsmerkmal ist das Federventil in den Kolbenstellungen vom unteren Totpunkt bis kurz vor dem oberen Totpunkt bei etwa 160 Grad geöffnet.

Die Erfindung wird nachfolgend an einem Ausführungsbeispiel unter Bezugnahme auf die Zeichnungen näher erläutert. Es zeigen: Fig. 1 eine schematische Schnittdarstellung eines Teiles der erfindungsgemäßen Verbrennungskraftmaschine mit Zwillings-Gas-Injektoren und einem Thermolyse-Katalysator, Fig. 2 schematisch im Detail die Zwillings-Gas-Injektoren und Fig. 3 eine schematische Darstellung einer vollständigen Verbrennungskraftmaschine.

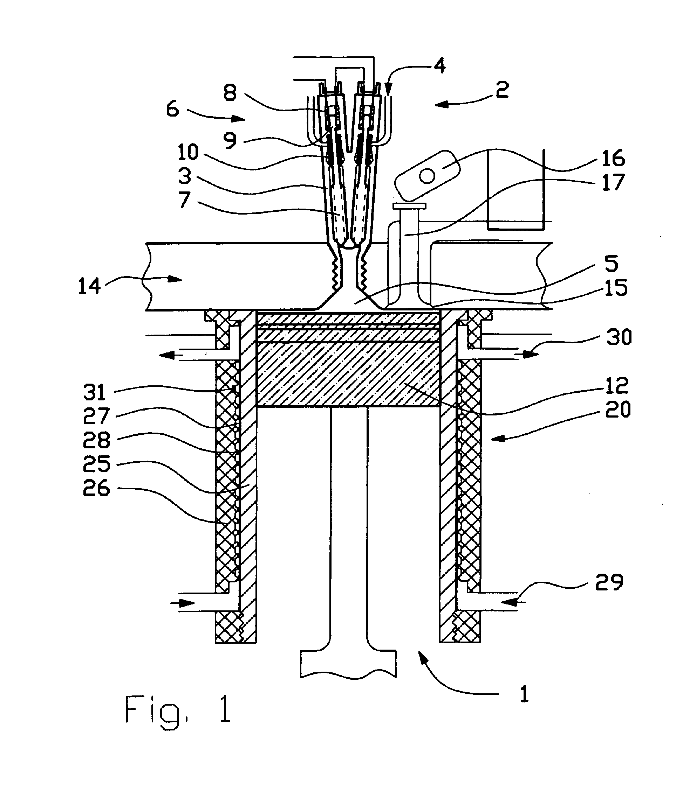

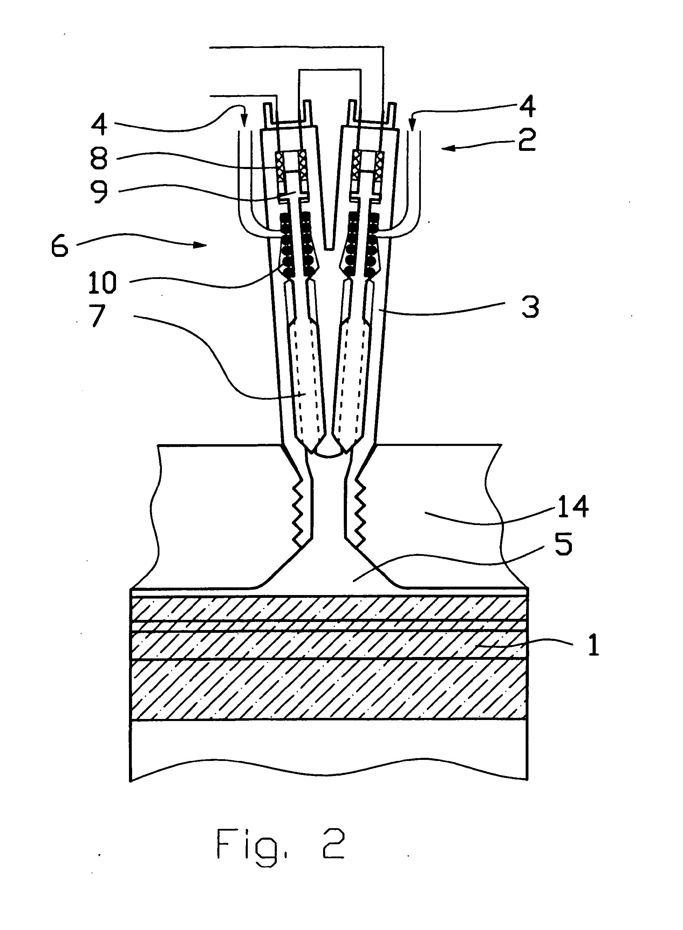

Gemäß den Fig. 1 und 2 weist die erfindungsgemäße Verbrennungskraftmaschine zumindest einen Kolbenzylinder 1 und ein Zwillings-Gas-Injektoren 2 umschließendes Gehäuse 3 mit zwei Einlassöffnungen 4 für das getrennte Zuführen der Energieträger Wasserstoffgas (H₂) und Sauerstoffgas (O₂) im Verhältnis 2:1 in den Brennraum 5 auf, wobei zwei druck- und zeitgesteuerte, elektrische Einlassventile 6 das Zuführen der Energieträger über zwei beabstandete, im Gehäuse 3 angeordnete Düsennadeln 7 präzise gemäß den Betriebserfordernissen steuern. Die zwei Einlassventile 6 umfassen jeweils eine Spule 8, einen Anker 9 und eine Druckfeder 10.

Die erfindungsgemäße Verbrennungskraftmaschine weist keine Lufteinlassöffnung auf, da für die Reaktion des Sauerstoffgases mit dem Wasserstoffgas keine Luftzufuhr erforderlich ist.

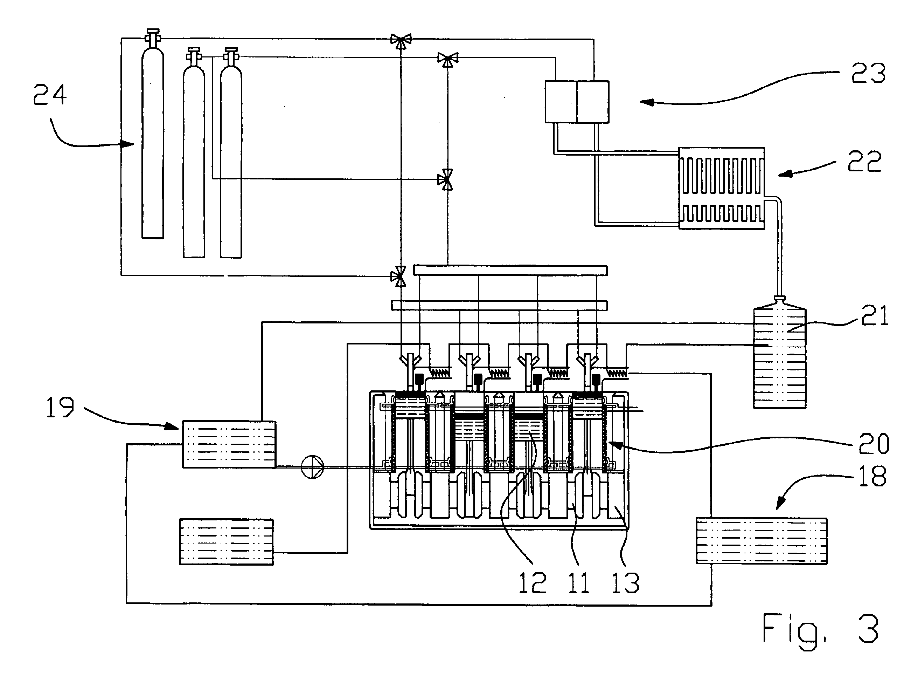

Da während des Startvorganges kein Schwung vorhanden ist, wird die in Fig. 3 dargestellte Kurbelwelle 11 über einen nicht gezeigten elektrischen Anlasser angetrieben, wobei bei einer Kolbenstellung kurz vor dem oberen Totpunkt die Zwillings-Gas-Injektoren 2 Wasserstoffgas und Sauerstoffgas im ms-Bereich in den Brennraum 5 des Zylinders 1 einleiten. In der Kaltstartphase wird durch Fremdzündung, beispielsweise durch einen Zündfunken oder einen Glühstab, das eingebrachte Wasserstoff-Sauerstoff-Gasgemisch im Verhältnis 2:1 (Knallgas) zur Verbrennung gebracht. Nach Erreichen einer konstanten Brennraumtemperatur von etwa 700 Grad C wird die Fremdzündung abgeschaltet und die Selbstzündung einer vorbestimmten Kolbenstellung angepasst. Im anschließenden Arbeitstakt verbrennt das Gasgemisch bei einer Temperatur bis zu 3000 Grad C und ergibt Wassermoleküle, wobei der sich ergebende Druck- und Volumenanstieg des Gasgemisches den Kolben 12 zum unteren Totpunkt des Zylinders 1 bewegt. Die mit der Kurbelwelle 11 verbundene Schwungmasse 13 führt den Kolben 12 zum oberen Totpunkt, wobei bei den Kolbenstellungen vom unteren Totpunkt bis kurz vor dem oberen Totpunkt bei etwa 160 Grad eine im Zylinderkopf 14 angeordnete Auslassöffnung 15 mittels eines von einer doppeltwirkender Nockenwelle 16 gesteuerten Federventiles 17 geöffnet wird und die Wassermoleküle zu einem Abgaswassertank 18 geleitet werden. Die im Abgaswassertank 18 gesammelten Wassermoleküle werden zu einem Reinwassertank 19 geleitet und anschließend zu einem die Brennraumummantelung der Verbrennungskraftmaschine bildenden Thermolyse-Katalysator 20 zugeführt, welcher die Wassermoleküle thermisch in Wasserstoffgas und Sauerstoffgas zersetzt. Das gebildete Gasgemisch wird in eine Kühlwasservorrichtung 21 geleitet, wodurch geringfügig vorhandener Wasserdampf zu Wasser kondensiert. Anschließend wird das reine Wasserstoff/Sauerstoff-Gasgemisch einer Gastrennungseinrichtung 22 zugeführt, welche das Wasserstoffgas vom Sauerstoffgas trennt. Anschließend werden die getrennten Gase in einem Hochdruckverdichter 23 verdichtet und in Speichervorrichtungen 24 gespeichert, um der Verbrennungskraftmaschine als Energieträger wieder zugeführt zu werden.

Der Thermolyse-Katalysator 20 weist zwei konzentrische und in einem Abstand von vorzugsweise 1 bis 2 mm angeordnete Hohlzylinder 25 und 26 auf, die einen Zwischenraum 27 umschließen, der mit einer Metallbeschichtung 28 aus vorzugsweise Platin, Palladium, Iridium, Osmium, Rhodium od.dgl. versehen ist. Der äußere Hohlzylinder 26 ist mit einer sich nahe dessen Grundfläche radial erstreckenden Einlassöffnung 29 für die Zufuhr von Wasser und einer sich nahe dessen Deckfläche radial erstreckenden Auslassöffnung 30 für die Abgabe von Knallgas an die Kühlwasservorrichtung 21 versehen. Die infolge der Verbrennung der Energieträger im Brennraum 5 des inneren Hohlzylinders 25 entstehende Wärme, erhitzt im Falle einer aus Platin gebildeten Metallbeschichtung 28 des inneren Hohlzylinders 25 diese auf eine Temperatur von ca. 1200°C und versetzt sie in einen Glühzustand. Das über die Einlassöffnung 29 in den Zwischenraum 27 strömende Wasser wird durch die stark erhitzten Hohlzylinder 25 uns 26 unmittelbar unter Bildung von überhitzten Wasserdampf (2H₂O) übergeführt, wobei aufgrund der Wechselwirkung des Wasserdampfes mit der Platinbeschichtung 28 die überhitzten Wasserdampfmoleküle in Knallgas (2H₂ + O₂), einem Gemisch aus gasförmigen Wasserstoff (2H₂) und Sauerstoff (O₂) im Volumenverhältnis H:O = 2:1, thermisch zersetzt werden. Durch einen vor der Auslassöffnung 30 angeordneten Temperaturfühler 31 wird die Wasserzufuhr derart gesteuert, dass der erzeugte überhitze Wasserdampf die Temperatur der glühenden Platinbeschichtung 28 konstant auf einer idealen Temperatur von ca. 1200°C hält.

Die erfindungsgemäße Verbrennungskraftmaschine kann im Viertakt als auch im Zweitakt betrieben werden, da kein eigener Ansaugtakt und Verdichtungstakt erforderlich sind. Der Zündwinkel pro Zylinder kann daher im laufenden Betrieb von 720 Grad auf 360 Grad umgeschaltet werden, wodurch eine Erhöhung der Leistung der Verbrennungskraftmaschine ohne Verzögerung möglich ist.

Der Vorteil der Erfindung ist, dass keine Schadstoffe entstehen, wie beispielsweise Stickoxid (NOₓ), Kohlendioxid (CO₂), Ruß- oder Staubpartikel, somit die Umwelt nicht belastet wird.

Es versteht sich, dass die beschriebene Ausführungsform im Rahmen des allgemeinen Erfindungsgedankens verschiedentlich abgewandelt werden kann. Beispielsweise kann als Verbrennungskraftmaschine eine Kreiskolbenmaschine vorgesehen werden.

## Patentansprüche

1. Verbrennungskraftmaschine mit zumindest einem Kolbenzylinder, **dadurch gekennzeichnet, dass** sie ein Zwillings-Gas-Injektoren (2) umschließendes Gehäuse (3) mit zwei Einlassöffnungen (4) für das getrennte Zuführen von Wasserstoffgas und Sauerstoffgas in den Brennraum (5) des Kolbenzylinders (1) aufweist, wobei das Gehäuse (3) mit zwei druck- und zeitgesteuerten, elektrischen Einlassventilen (6) und zugeordneten Düsennadeln (7) versehen ist, dass der Brennraum (5) eine Auslassöffnung (15) zum Ausstoßen des Verbrennungsproduktes aufweist, und dass ein Thermolyse-Katalysator (20) die Brennraumummantelung bildet, welcher zwei zueinander beabstandete und konzentrisch angeordnete, einen Zwischenraum (27) umschließende Hohlzylinder (25, 26) aufweist, wobei die den Zwischenraum (27) begrenzenden Wandungen der Hohlzylinder (25, 26) mit einer Metallbeschichtung (28) zur Abgabe der den inneren Hohlzylinder (25) beaufschlagenden Verbrennungswärme versehen sind, und wobei der äußere Hohlzylinder (26) mit einer Einlassöffnung (29) für die Zufuhr von Wasser, einer Auslassöffnung (30) für die Abgabe von Knallgas und einem Temperaturfühler (31) zur Wasserzufuhrsteuerung versehen ist.

2. Verbrennungskraftmaschine nach Anspruch 1, **dadurch gekennzeichnet, dass** die Auslassöffnung (15) des Brennraumes mit einem durch eine doppeltwirkende Nockenwelle (16) gesteuerten Federventil (17) verschließbar ist.

3. Verbrennungskraftmaschine nach Anspruch 1 und 2, **dadurch gekennzeichnet, dass** die Einlassventile (6) des Gehäuses (3) jeweils eine Spule (8), einen Anker (9) und eine Druckfeder (10) aufweisen.

4. Verbrennungskraftmaschine nach einem der Ansprüche 1 bis 3, **dadurch gekennzeichnet, dass** das Federventil (17) in den Kolbenstellungen vom unteren Totpunkt bis kurz vor dem oberen Totpunkt bei etwa 160 Grad geöffnet ist.

5. Verbrennungskraftmaschine nach einem der Ansprüche 1 bis 4, **dadurch gekennzeichnet, dass** sie frei von Lufteinlassöffnungen ausgebildet ist.

6. Verbrennungskraftmaschine nach einem der Ansprüche 1 bis 5, **dadurch gekennzeichnet, dass** sie für den Betrieb im Viertakt bzw. Zweitakt mit einem Zündwinkel von 720 Grad bzw. 320 Grad pro Zylinder ausgeführt ist.

## Claims

1. Internal combustion engine comprising at least one piston cylinder, **characterised in that** said internal combustion engine comprises a housing (3) which encloses twin gas injectors (2) and which has two inlet openings (4) for the separate supply of hydrogen gas and oxygen gas to the combustion chamber (5) of the piston cylinder (1), the housing (3) being provided with two pressure-controlled and time-controlled electric inlet valves (6) and associated nozzle needles (7), **in that** the combustion chamber (5) comprises an outlet opening (15) for ejection of the combustion product, and **in that** a thermolysis catalyst (20) forms the combustion chamber casing and comprises two hollow cylinders (25, 26) which are arranged concentrically at a distance from one another and enclose an intermediate space (27), the walls of the hollow cylinders (25, 26) defining the intermediate space (27) being provided with a metal coating (28) for release of the combustion heat acting on the inner hollow cylinder (25), and the outer hollow cylinder (26) being provided with an inlet opening (29) for the supply of water, an outlet opening (30) for the release of oxyhydrogen gas, and a temperature sensor (31) for controlling water supply.

2. Internal combustion engine according to claim 1, **characterised in that** the outlet opening (15) in the combustion chamber is closable by a spring valve (17) controlled by a double-acting camshaft (16).

3. Internal combustion engine according to claims 1 and 2, **characterised in that** each of the inlet valves (6) of the housing (3) comprises a coil (8), an anchor (9) and a compression spring (10).

4. Internal combustion engine according to any one of claims 1 to 3, **characterised in that** the spring valve (17) is opened at approximately 160 degrees in the piston positions from the bottom dead centre to shortly before the top dead centre.

5. Internal combustion engine according to any one of claims 1 to 4, **characterised in that** it is free from air-inlet openings.

6. Internal combustion engine according to any one of claims 1 to 5, **characterised in that** it is configured for operation in a four-stroke cycle or two-stroke cycle with an advance angle of 720 degrees or 320 degrees per cylinder.

## Revendications

1. Moteur à combustion interne comprenant au moins une unité à piston-et-cylindre, **caractérisé en ce qu'**il comprend un boîtier (3), entourant des injecteurs jumelés à gaz (2), avec deux ouvertures d'entrée (4) pour l'admission séparée d'hydrogène gazeux et d'oxygène gazeux dans la chambre de combustion (5) du cylindre (1), le boîtier (3) étant pourvu de deux soupapes d'admission électriques (6) commandées en pression et en temps, et des aiguilles de buses associées (7), **en ce que** la chambre de combustion (5) comprend une ouverture de sortie (15) pour l'échappement du produit de combustion, et **en ce qu'**un catalyseur de thermolyse (20) forme le chemisage de la chambre de combustion, le catalyseur comprenant deux cylindres creux (25, 26) à distance l'un de l'autre et agencés concentriquement, entourant un espace intermédiaire (27), dans lequel les parois, limitant l'espace intermédiaire (27), du cylindre creux (25, 26) sont pourvues d'un revêtement métallique (28) pour dissiper la chaleur de combustion qui baigne le cylindre creux intérieur (25), et dans lequel le cylindre extérieur creux (26) est pourvu d'une ouverture d'entrée (29) pour l'admission d'eau, d'une ouverture de sortie (30) pour le dégagement de gaz explosif, et d'un capteur de température (31) pour la commande de l'admission d'eau.

2. Moteur à combustion interne selon la revendication 1, **caractérisé en ce que** l'ouverture de sortie (15) de la chambre de combustion est susceptible d'être refermée avec une soupape à ressort (17) commandée par un arbre à cames (16) à double effet.

3. Moteur à combustion interne selon la revendication 1 et 2, **caractérisé en ce que** les soupapes d'admission (6) du boîtier (3) comprennent chacune une bobine (8), un induit (9), et un ressort de compression (10).

4. Moteur à combustion interne selon l'une des revendications 1 à 3, **caractérisé en ce que** la soupape à ressort (17) est ouverte dans les positions du piston depuis le point mort bas jusqu'à une courte distance avant le point mort haut, sur environ 160°.

5. Moteur à combustion interne selon l'une des revendications 1 à 4, **caractérisé en ce qu'**il est réalisé dépourvu d'ouvertures d'entrée d'air.

6. Moteur à combustion interne selon l'une des revendications 1 à 5, **caractérisé en ce qu'**il est réalisé pour un fonctionnement à quatre temps ou à deux temps avec un angle d'allumage de respectivement 720° ou 320° par cylindre.
